# EUROPÄISCHE PATENTSCHRIFT

(11) **EP 3 045 910 B1**
(45) Veröffentlichungstag und Bekanntmachung des Hinweises auf die Patenterteilung: **05.02.2020**
(21) Anmeldenummer: 15202915.3
(22) Anmeldetag: 29.12.2015
(51) Int. Cl.: F17C 11/00, F17C 13/02, G01F 22/00, G01L 1/16, G01L 1/18, G01L 1/20

(54) **MESSEINRICHTUNG UND VERFAHREN ZUR BESTIMMUNG DER MENGE EINES IN EINEM SPEICHER AUFGENOMMENEN GASES AN EINEM PORÖSEN SPEICHERMATERIAL**
METHOD AND MEASURING DEVICE FOR DETERMINING THE AMOUNT OF A GAS CONTAINED IN A STORAGE DEVICE ON A POROUS STORAGE MATERIAL
DISPOSITIF DE MESURE ET PROCEDE DE DETERMINATION DE LA QUANTITE D'UN GAZ LOGE DANS UN ACCUMULATEUR SUR UN MATERIAU DE STOCKAGE POREUX

(30) Priorität: 15.01.2015 DE 102015100584
(43) Veröffentlichungstag der Anmeldung: 20.07.2016
(73) Patentinhaber: Fraunhofer-Gesellschaft zur Förderung der angewandten Forschung e.V., 80686 München (DE); Technische Universität Dresden, 01069 Dresden (DE)
(72) Erfinder: Pohlmann, Carsten, 92130 Issy-Moulineaux (FR); Röntzsch, Lars, 01309 Dresden (DE); Kieback, Bernd, 01728 Possendorf (DE); Heubner, Felix, 01309 Dresden (DE)
(74) Vertreter: Pfenning, Meinig & Partner mbB

(56) Entgegenhaltungen:
- JP-A- H0 389 145
- JP-A- 2004 028 756
- US-A1- 2003 070 487
- US-A1- 2003 159 829
- US-A1- 2010 050 734
- US-A1- 2012 198 917

## Beschreibung

Die Erfindung betrifft eine Messeinrichtung und ein Verfahren zur Bestimmung der Menge eines im Wesentlichen infolge von Absorption in einem Speicherbehälter aufgenommenen Gases an einem porösen Festkörper, der auf Basis des Speichermaterials, das im Speicherbehälter enthalten ist, gebildet ist. Sie kann insbesondere zur Bestimmung der momentanen Gasmenge, die innerhalb eines Feststoffreaktors, als Speicherbehälter durch Absorption an einem porösen Festkörper, der auf Basis des jeweiligen Speichermaterials, insbesondere einem Sorptionsspeichermaterial, wie es beispielsweise auf Basis von Metallhydriden zur Speicherung von Wasserstoff eingesetzt wird, gebildet ist, genutzt werden.

Bisher erfolgte eine solche Bestimmung durch Techniken, bei denen der Gasdruck und die Temperatur im Inneren eines Reaktors als Speicher berücksichtigt wurden. Dabei treten Probleme infolge des ausgeprägten Sorptionsplateaudrucks der Speichermaterialien auf. Ganz besonders schwierig und dadurch auch ungenau waren diese Messungen bei dynamischem Betrieb, d.h. in einer Phase, bei der eine Absorption oder Desorption von Gas erfolgt.

Durch eine Gasdruckmessung kann keine lineare Korrelation zur Menge an absorbiertem Gas in einem Speichermaterial ausgenutzt werden. Außerdem wirken sich Hystereseeffekte nachteilig aus. Die Kenntnis der momentanen Temperatur ist zwingend erforderlich. Die Temperatur ändert sich aber bei einer Absorption und auch bei der Desorption. Außerdem müssen vorab verschiedene Kennlinien für unterschiedliche Temperaturen und jeweilige Speichermaterialien für die Auswertung der Messergebnisse aufwändig erstellt werden.

Desweiteren ist eine Nachrüstung entsprechend geeigneter Messsysteme zur Bestimmung der Temperatur schwierig.

Eine Berücksichtigung eines sich im Laufe des Betriebs, insbesondere infolge von auftretenden Verunreinigungen, verändernden Absorptionsvermögens eines genutzten Speichermaterials, ist nicht bzw. nur mit extrem hohen Aufwand möglich.

Eine weitere bisher genutzte Möglichkeit zur Bestimmung einer gespeicherten Gasmenge, ist die Messung des jeweiligen Volumenstromes an Gas, das in einen Speicherbehälter eingeführt und dort vom Speichermaterial absorbiert worden ist und in umgekehrter Form dem Volumenstrom von aus dem Speicher infolge Desorption abgeführtem Gas. Solche Messsysteme sind kostenintensiv und aufwändig zu installieren. Außerdem ist eine Volumenstrommessung stark fehlerbehaftet. Außerdem ist es nicht möglich oder nur unter hohem Aufwand denkbar, die Speicherkapazität einzelner Tanksegmente zu bestimmen.

Neben den bereits erwähnten bekannten Möglichkeiten, erfolgt bisher auch eine Bestimmung der Menge an gespeichertem Gas auf Basis einer Ausdehnung des Speichermaterials.

Einerseits wird dabei die Ausdehnung direkt gemessen und so der Füllgrad bestimmt. Bei dieser Form muss für die Ausdehnung extra Raum vorgesehen werden, so dass ein Messgefäß deutlich größer sein muss, als eigentlich erforderlich ist. Auch wirkt sich die Ausrichtung des Messaufbaus auf das Messergebnis aus. Somit muss für eine bestimmte Ausrichtung gesorgt werden, was die Messung fehleranfällig macht.

Andererseits wird die Ausdehnung des Speichermaterials für die Verformung eines weiteren Körpers (z. B. metallisches Gehäuse, Diaphragma) genutzt, um über diese Verformung den Füllgrad zu bestimmen.

Es ist auch bekannt, die Bestimmung der Menge an gespeichertem Gas durch Messung der Deformation an einem Gehäuse, in dem zur Absorption geeignetes Speichermaterial enthalten ist, durchzuführen. Bei metallischen Gehäusen kann sich die Deformation durch Veränderung des metallischen Werkstoffes, beispielsweise infolge von Kaltverfestigung oder Veränderung der Festigkeit über die Lebensdauer, im Lauf der Zeit verändern, was zumindest eine regelmäßige Kalibrierung erforderlich machen würde. Ein Gehäuse muss aus für eine Verformung geeignetem Werkstoff mit entsprechender Wanddicke hergestellt worden sein. Es können nicht beliebige Formen eines Gehäuses genutzt werden und Verformungen, die nicht durch ein verändertes absorbiertes Gasvolumen hervorgerufen werden, müssen vermieden werden.

Bei Bestimmungen der Menge des absorbierten Gases auf Basis der Ausdehnung des Speichermaterials muss auch der Einfluss der Temperatur auf die Ausdehnung des Speichermaterials hoch genau berücksichtigt werden. Üblicherweise ist eine auftretende Verformung infolge eines veränderten absorbierten Gasvolumens auch nicht linear. Diese beiden Punkte machen eine komplizierte Hinterlegung von Kennkurven erforderlich.

Außerdem ist es nachteilig, dass die Messung der Verformung eines Gefäßes oder eines Diaphragmas in direkter Nachbarschaft zum Speichermaterial stattfinden muss, so dass die obere Temperatur der Messeinrichtung sich durch die Einsatztemperatur des Diaphragmas bzw. von auf dem Gefäß angebrachten Dehnmessstreifen ergibt.

Weitere Möglichkeiten der Bestimmung der Menge an absorbiertem Gas ergeben sich durch Messung verschiedener physikalischer Eigenschaften (Induktivität, elektrische Leitfähigkeit, optische Eigenschaften), die sich mit der Gasabsorption ändern. Der wesentliche Nachteil liegt hier in der Abhängigkeit des zu wählenden Messprinzips für das jeweilige Speichermaterial. Somit ergeben sich hier eine Vielzahl an komplexen Methoden und kein universeller Füllstandsanzeiger. Besonders nachteilig ist auch die Anfälligkeit bei auftretenden Schwingungen bzw. Vibrationen, die zur Verfälschung der Messergebnisse führen.

So sind aus US 2003/0070487 A1 Möglichkeiten zur Bestimmung der Menge an Wasserstoff bekannt, die eine Verformung, eine Änderung des Wasserstoffdruckes, einen Farbumschlag oder eine Änderung des elektrischen Widerstandes nutzen. US 2003/0070487 A1 offenbart den Oberbegriff des Anspruchs 1.

In JP 2004 028 756 A wird beschrieben, wie die Expansion und das Zusammenziehen von Partikeln eines Speichermaterials, die in einer Harzschicht eingebettet sind, zur Bestimmung der gespeicherten Gasmenge ausgenutzt werden.

Eine Verformung in Verbindung mit der Ausnutzung magnetischer Kräfte wird bei der aus JP H03 89145 A bekannten Technik eingesetzt, um eine gespeicherte Gasmenge zu erfassen.

Ein Wasserstoffsensor, der in Verbindung mit einem Wasserstoffspeichermaterial eingesetzt ist, ist aus US 2010/0050734 A1 bekannt.

US 2012/0198917 A1 betrifft einen Beladungsindikator für eine Menge eines enthaltenen Fluids.

Ein Aktuator, der eine Verschiebung eines Elements ausnutzt, ist aus US 2003/0159829 A1 bekannt.

Es ist daher Aufgabe der Erfindung, Möglichkeiten für die Bestimmung absorbierter Gasmengen in Speichermaterialien anzugeben, die mit kleiner Zeitkonstante, erhöhter Messgenauigkeit, reduziertem Messaufwand sowie geringem Aufwand erreichbar sind.

Erfindungsgemäß wird diese Aufgabe mit einer Messeinrichtung, die die Merkmale des Anspruchs 1 aufweist, gelöst. Der Anspruch 10 gibt ein Verfahren dazu an. Vorteilhafte Ausgestaltungen und Weiterbildungen der Erfindung können mit in untergeordneten Ansprüchen bezeichneten Merkmalen realisiert werden.

Bei einer erfindungsgemäßen Messeinrichtung zur Bestimmung der Menge eines in einem Speicherbehälter aufgenommenen Gases an einem Speichermaterial, ist in einem Hohlraum eines Gehäuses das gleiche oder ein auf dem Speichermaterial basierendes Material in Form eines porösen Festkörpers, wie im Speicherbehälter aufgenommen. Dabei steht mindestens ein Kraftmesssensor mit dem im Hohlraum aufgenommenen porösen Festkörper in Kontakt. Die Innenwand des Gehäuses bildet ein Widerlager für den porösen Festkörper in einer Kraftmessrichtung und im Gehäuse ist eine Öffnung vorhanden, über die ein Gasaustausch zwischen Hohlraum und dem Inneren des Speicherbehälters möglich ist. Der mindestens eine Kraftmesssensor ist mit einer Auswerteeinheit verbunden, mit der die Bestimmung der Menge des aufgenommenen Gases erreichbar ist. Entscheidend ist, dass es zu keiner lateralen Ausdehnung des porösen Festkörpers im Hohlraum der Messeinrichtung kommt.

Die jeweilige gespeicherte Gasmenge wird im Wesentlichen infolge Absorption oder Desorption verändert.

Dabei kann ausgenutzt werden, dass das im Festkörpermaterial (Speichermaterial) absorbierte Gas sich in das Kristallgitter des Festkörpermaterials (Speichermaterials) einlagert, so dass sich das Kristallgitter in Abhängigkeit der absorbierten Gasmenge ausdehnt. Die jeweilige Ausdehnung führt zu inneren mechanischen Spannungen im porösen Festkörpermaterial, die sich in einer Kraftwirkung zwischen einer Wand des Gehäuses und mindestens einem gegenüberliegend angeordneten Kraftmesssensor äußern. Das gemessene Kraftsignal ist dann proportional zur infolge Absorption am Festkörpermaterial gespeicherten Gasmenge. Dieser Vorgang ist hysteresefrei und temperaturunabhängig, was sich deutlich positiv für die Reproduzierbarkeit der Messung darstellt. Da keine Verformung einer Behälterwand oder eines Diaphragmas bei der Kraftmessung erforderlich ist, ist auch eine kleinere Zeitkonstante gegeben.

Die Wandung des Gehäuses soll eine ausreichende Festigkeit aufweisen, die eine Deformation bei der Kraftmessung unbedingt vermeidet. Ein oder mehrere Kraftmesssensor(en) kann/können sich so an der inneren Wandung im Hohlraum des Gehäuses abstützen und daran anliegen. Die gegenüberliegende Oberfläche des/der Kraftmesssensors(en) steht dann generell in direktem oder indirektem Kontakt mit dem Festkörper, ohne dass eine veränderte laterale Ausdehnung des Festkörpers infolge Absorption oder eine Veränderung des Volumens des Festkörpers infolge Desorption aufgetreten ist.

Geeignete Messsensoren sind zum Beispiel:_Kraftsensoren unter Ausnutzung des Ohmschen Effektes, des piezoelektrischen Effektes oder des piezoresistiven Effektes.

Durch die Kraftmessung können auch die maximal und minimal absorbierbaren Gasmengen erfasst werden. Dadurch und die Proportionalität können Kennlinien aufgenommen werden, die bei der Auswertung der Kraftmesssignale genutzt werden können. So ist es möglich, die maximal absorbierbare Gasmenge und den Zustand bei dem kein Gas absorbiert ist, also den voll beladenen Zustand und den voll entladenen Zustand zu erfassen und diese beiden Werte für eine Kennlinie zur Bestimmung der absorbierten Gasmenge in Abhängigkeit der gemessenen Kräfte nutzen zu können. Dieses Maximum und Minimum gilt anschließend für jede beliebige Temperatur, in der das Speichermaterial das Gas absorbieren kann. Damit ist die Messeinrichtung ausreichend charakterisiert und kann genutzt werden, um den relativen Füllstand jedes beliebigen angeschlossenen Speichertanks mit gleichem Speichermaterial zu ermitteln. Das bedeutet, es ist möglich einzelnen Tanksegmente zu erfassen oder ganze Tanksysteme, ohne die Messeinrichtung auf das eigentliche Speichersystem zu kalibrieren, solange das gleiche Speichermaterial benutzt wird.

Zur Vermeidung einer Verunreinigung des im Gehäuse aufgenommenen Speichermaterials kann an/in der Öffnung des Gehäuses eine Einrichtung für einen Gasaustausch, insbesondere ein für das jeweilige Gas permeabler Partikelfilter oder eine permeable Membran angeordnet sein.

Der im Hohlraum aufgenommene Festkörper, der aus einem Material auf Basis des Speichermaterials oder aus dem gleichen Material, wie das Speichermaterial_gebildet ist, sollte eine maximale Porosität von 75 Vol.-% aufweisen. Er kann als Schüttung oder in verpresster Form, beispielsweise in Form von Pellets oder eines Granulats vorliegen. Es besteht die Möglichkeit, dass neben dem Speichermaterial mindestens ein weiterer Stoff im Hohlraum enthalten ist. Als weiterer Stoff kann beispielsweise Graphit oder metallische, nicht an der Absorption teilnehmende, Zusätze (z. B. Aluminium, Kupfer) oder katalytische Zusätze, die die Kinetik der Sorptionsreaktion beeinflussen, neben dem Speichermaterial im Hohlraum enthalten sein. Der Anteil an zweitem oder mehreren weiteren Stoff(en) sollte kleiner als 50 Vol.-% sein.

Da unter den Begriff Gas, neben reinem Gas auch ein Gemisch mehrerer Gase verstanden werden sollte, kann in einer Ausführungsform der Erfindung ein zweiter oder weiterer Werkstoff auch besonders spezifisch für ein zweites oder weiteres Gas sein und ein solches Gas besser absorbieren, als der Festkörper, der wiederum ein anderes Gas besser oder ausschließlich absorbiert. Mit der Erfindung kann dann die Gesamtmenge des gespeicherten Gasgemisches bestimmt werden.

Zur Bildung des porösen Festkörpers kann das Speichermaterial oder das auf dem Speichermaterial basierende Material als gerüttelte Schüttung, als geregelte Schüttung oder in Form einzelner Partikel, die in einer einzelnen Lage angeordnet sind, ausgeführt sein. Die Anordnung des Kraftmesssensors kann entsprechend so gewählt werden, dass infolge mechanischer Spannungen im Festkörper eine jeweils maximale Kraftwirkung auftritt und mit dem mindestens einen Kraftmesssensor die daraus resultierende Kraft gemessen werden kann.

Die Messeinrichtung kann in das Innere des Speicherbehälters oder eine Verbindungsleitung, über die ein Gasaustausch mit dem Speicherbehälter erfolgt, eingeführt oder darin angeordnet sein. Dadurch lassen sich jeweils gleiche Umgebungsbedingungen und ggf. dabei auch gleiche Temperaturen einhalten.

Besonders vorteilhaft kann eine Temperiereinrichtung am Gehäuse vorhanden oder im Gehäuse integriert sein. Dadurch kann eine bestimmte Temperatur, die bevorzugt der jeweiligen Temperatur des Speichermaterials im Speicher entspricht, eingehalten werden. Hierzu kann die Temperatur entsprechend geregelt werden. Dabei kann mindestens ein Temperatursensor genutzt werden.

Bei sehr hohen Temperaturen, die den Einsatzbereich des mindestens einen Kraftsensors überschreiten, ist eine vorteilhafte Ausführung der Messeinrichtung so zu gestalten, dass die Kraftentwicklung durch ein temperaturstabiles Element vom warmen Reaktionsbereich in einen aktiv gekühlten Messbereich überführt wird.

Auf einen Temperatursensor und eine Temperierung sollte nur verzichtet werden, wenn die Kraftmessung bei zumindest annähernd den gleichen Temperaturen, die auch das Speichermaterial im Speicherbehälter aufweisen, durchgeführt werden kann. Dazu kann beispielsweise das Gehäuse mit Speichermaterial und Kraftmesssensor unmittelbar im Speicherbehälter und dabei im oder unmittelbar am Speichermaterial angeordnet sein.

Die Bestimmung der absorbierten Gasmenge sollte bei einer bekannten und/oder vorgegebenen Temperatur durchgeführt werden. Die jeweilige Temperatur sollte bei der Bestimmung der Menge des vom Speichermaterial absorbierten Gases berücksichtigt werden.

Der mindestens eine Kraftmesssensor kann einen Verschluss für das Gehäuse bilden. Dadurch ist es möglich, den Kraftmesssensor und/oder den Festkörper im Hohlraum bei Bedarf auszutauschen. Der Festkörper kann ausgetauscht werden, wenn sich das Absorptionsvermögen des Festkörpermaterials über die Lebensdauer verändert hat und die Abweichung zum Absorptionsvermögen des Speichermaterials im Speicherbehälter zu groß geworden ist. Ein Austausch kann auch erfolgen, wenn eine Anpassung an ein anderes Speichermaterial im Speicherbehälter erforderlich ist. Dies kann/können ein anderer Werkstoff und/oder eine andere Porosität sein.

Bei der erfindungsgemäßen Vorgehensweise kann durch einen zeitlichen Vergleich der wirkenden maximalen Kraft, der Zustand des Speichermaterials bestimmt und/oder bei der Bestimmung der Menge des vom Speichermaterial absorbierten Gases im Speicherbehälter berücksichtigt werden.

Als Speichermaterialien können beispielsweise Metallhydride (z.B. MgH₂-Basis), intermetallische Legierungen (z B. TiMn₂-Basis, TiCr₂-Basis, LaNi₅-Basis, FeTi-Basis), Komplexhydride (z.B. NaAlH₄-Basis, LiNH₂-Basis, LiBH₄-Basis) für Wasserstoff oder Salze (z.B. BaCl₂-Basis, CaCl₂-Basis) für Ammoniak oder Oxide/Hydroxide (z.B. CaO/Ca(OH)₂-Basis) für Wasserdampf oder Oxide (z.B. PbO-Basis, CaO-Basis) für Kohlendioxid eingesetzt werden.

Die erfassten Kraftmesssignale können über eine Verbindungsleitung zur Auswerteeinheit übertragen werden. Es kann aber auch eine drahtlose Übertragung, beispielsweise eine Bluetooth-Verbindung, benutzt werden.

Nachfolgend soll die Erfindung beispielhaft näher erläutert werden.

Dabei zeigen:
Figur 1 in schematischer Form den Aufbau eines Beispiels einer erfindungsgemäßen Messeinrichtung;
Figur 2 in schematischer Form den Aufbau eines Beispiels einer erfindungsgemäßen Messeinrichtung, die als direkter Verschluss für den Tank ausgeführt ist;
Figur 3 in schematischer Form den Aufbau eines Beispiels einer erfindungsgemäßen Messeinrichtung, die aktiv temperiert wird;
Figur 4 in schematischer Form den Aufbau eines Beispiels einer erfindungsgemäßen Messeinrichtung, die in einen warmen Reaktions- und einen kalten Messbereich getrennt vorliegt;
Figur 5 ein Diagramm der Abhängigkeit der bei der Absorption und Desorption auftretenden mechanischen Spannungen von der jeweils absorbierten Wasserstoffmenge in Masse-%;
Figur 6 ein Diagramm der Abhängigkeit der bei der Absorption und Desorption auftretenden mechanischen Spannungen von der jeweils absorbierten Wasserstoffmenge in Masse-%, bei verschiedenen Temperaturen und
Figur 7 Diagramme der Abhängigkeiten der gemessenen Kraft oder des Gleichgewichtsdruckes in Bezug zur jeweils absorbierten Wasserstoffmenge.

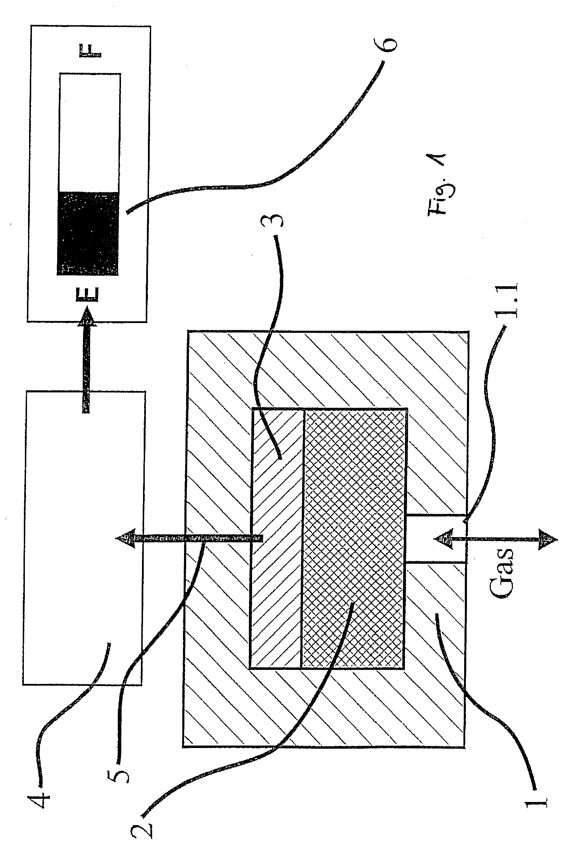

In Figur 1 ist schematisch ein Beispiel einer erfindungsgemäßen Messeinrichtung gezeigt. Dabei ist in einem Gehäuse 1 ein Hohlraum ausgebildet, der über eine Öffnung 1.1 mit der Umgebung für einen Gasaustausch (mit dem Doppelpfeil angedeutet) verbunden ist. Dadurch können gleiche Bedingungen, wie in einem Speicherbehälter (nicht gezeigt), der mit dem porösen Festkörper 2 auf Basis des gleichen Speichermaterials, das auch im Hohlraum, der im Inneren des Gehäuses 1 ausgebildet ist, aufgenommen ist, befüllt ist, eingehalten werden. Bei diesem Beispiel ist der Hohlraum vollständig mit dem porösen Festkörper 2 auf Basis des Speichermaterials, das in diesem Fall für die Absorption und Desorption von Wasserstoff vorgesehen ist, bis auf den Bereich in dem der Kraftmesssensor 3 angeordnet ist, vollständig ausgefüllt ist. Der poröse Festkörper 2 steht dabei in berührendem Kontakt zu der nutzbaren Oberfläche des Kraftmesssensors 3. Der poröse Festkörper 2 hatte eine Porosität von ca. 30 Vol.-% und basiert auf einer TiMn₂-Legierung zur Speicherung von Wasserstoff im Niedrigtemperaturbereich (-20°C bis 100°C). Der Kraftmesssensor 3 ist über die Verbindungsleitung 5 mit der elektronischen Auswerteeinheit 4 verbunden, mit der die jeweils gemessenen Kraftmesssignale zur Bestimmung der jeweils gespeicherten Gasmenge genutzt werden. Die jeweils gespeicherte Gasmenge kann an dem Display 6 optisch angezeigt werden.

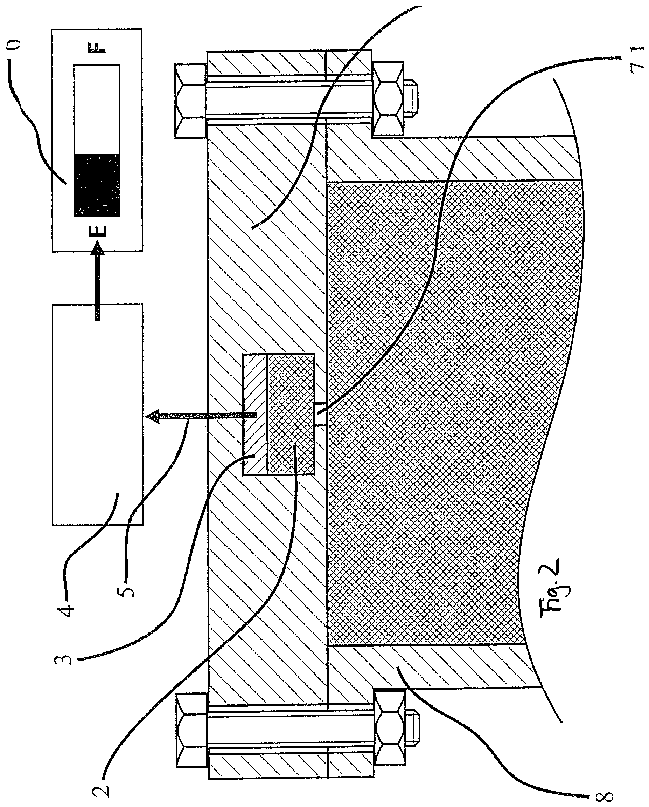

Die Messeinrichtung kann unmittelbar im Speicherbehälter angeordnet sein. So ist in Figur 2 schematisch ein Beispiel einer erfindungsgemäßen Messeinrichtung gezeigt, die im Flansch des Speicherbehälters eingebaut ist. Dabei ist in einem Flansch 7 ein Hohlraum ausgebildet, der über eine Öffnung 7.1 mit dem Speichertank 8 für einen Gasaustausch verbunden ist. Bei diesem Beispiel ist der Hohlraum vollständig mit dem porösen Festkörper 2 auf Basis des Speichermaterials bis auf den Bereich in dem der Kraftmesssensor 3 angeordnet ist, vollständig ausgefüllt. Der poröse Festkörper 2 steht dabei in berührendem Kontakt zu der nutzbaren Oberfläche des Kraftmesssensors 3.

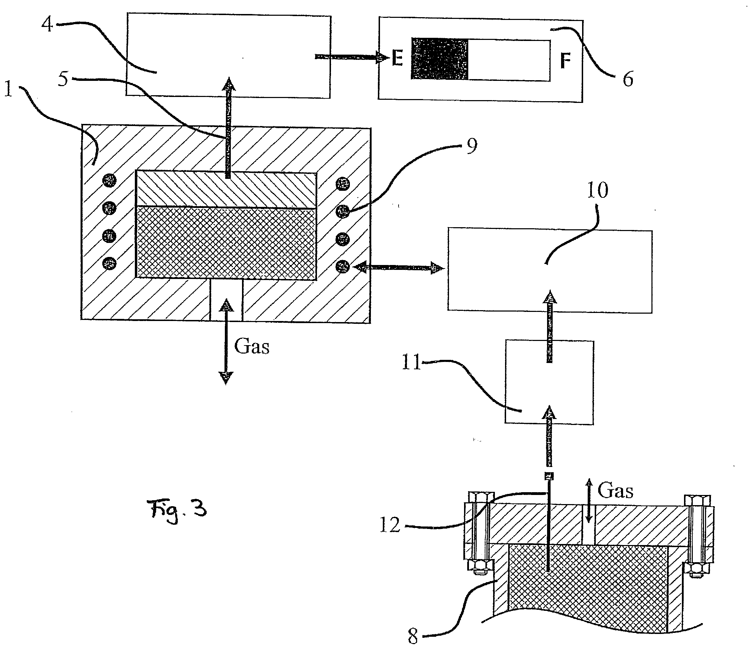

In Figur 3 ist am Gehäuse eine Temperiereinrichtung 9, beispielsweise eine elektrische Widerstandsheizung, die mit Hilfe einer Temperaturregelung 10 auf Basis einer Temperaturerfassung 11 durch einen Temperatursensor 12 im Speichertank 8 betrieben werden kann, vorhanden. Für eine Temperierung können aber auch Kanäle in Wänden des Gehäuses 1 ausgebildet sein, durch die ein geeignetes Temperierfluid, beispielsweise Wasser, strömen kann.

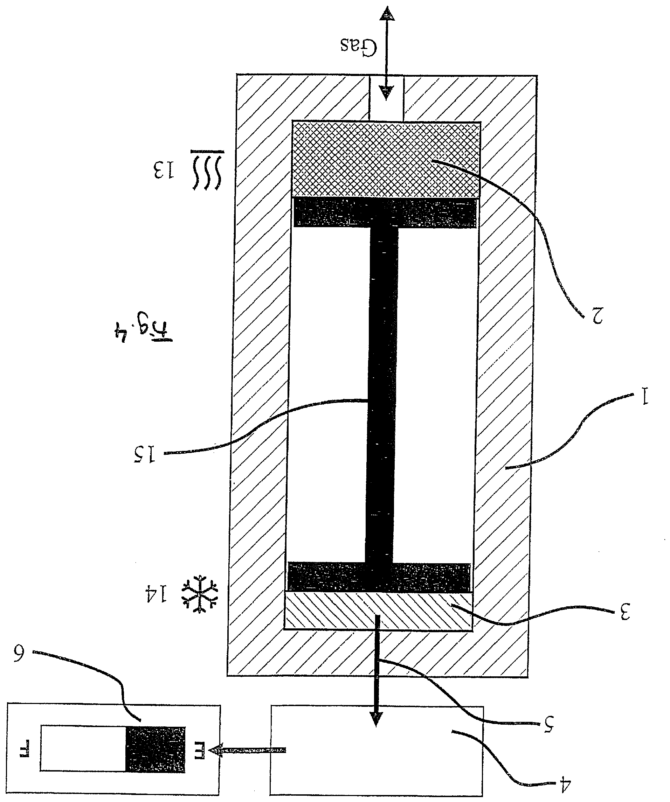

Die Messeinrichtung kann in eine Warm- und Kaltzone aufgeteilt sein, wobei die Sorption bei Temperaturen oberhalb der Arbeitstemperatur der Kraftmesseinrichtung von statten geht, sodass die Sorption und die Kraftmessung räumlich getrennt und bei unterschiedlichen Temperaturen durchgeführt werden muss. So ist in Figur 4 schematisch ein Beispiel einer erfindungsgemäßen Messeinrichtung gezeigt, die sich durch eine warme Sorptionszone 13 und eine kalte Messzone 14 auszeichnet. Die Kraftentwicklung des porösen Festkörpers 2 wird durch ein temperaturstabiles Element 15 vom warmen Reaktionsbereich 13 in einen aktiv gekühlten Messbereich 14 zum Kraftmesssensor 3 überführt.

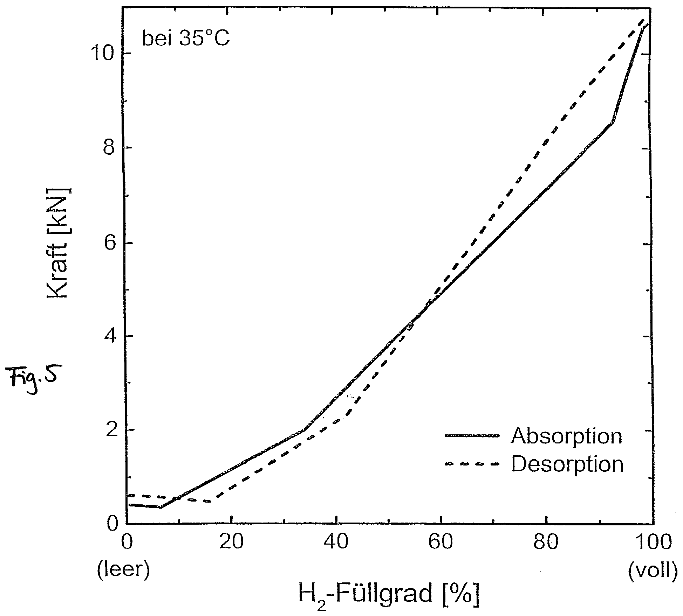

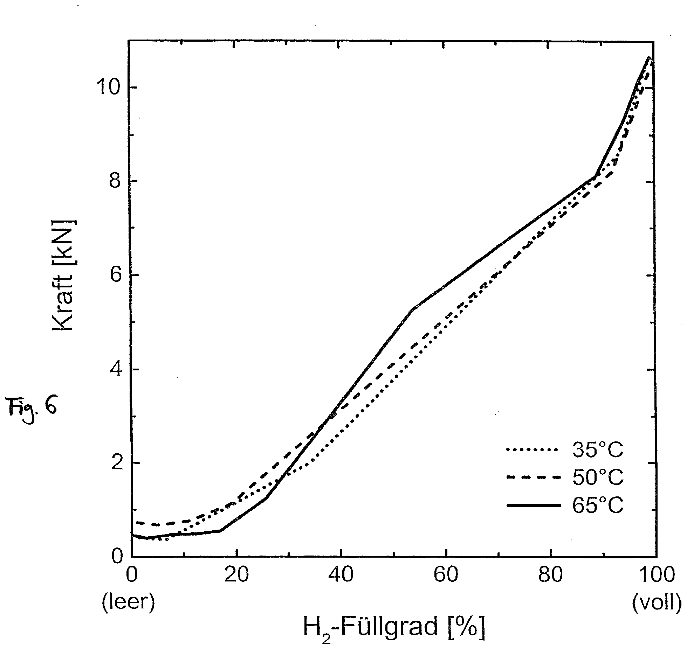

Mit den in Figuren 5 und 6 gezeigten Diagrammen wird deutlich, dass bei der Absorption und Desorption nahezu lineare proportionale Verhältnisse mit der Erfindung erreicht werden können. Lediglich im Bereich zu Beginn der Absorption, also bei kleinen absorbierten Gasmengen tritt ein progressiver Anstieg auf und am Ende der der maximal erreichbaren Absorption (Sättigungsbereich) ist ein degressiver Anstieg zu verzeichnen. Figur 5 verdeutlich dabei, dass keine Hysterese zwischen Absorption und Desorption auftritt. Die Messeinrichtung ist somit reaktionswegunabhängig. Figur 6 verdeutlicht, dass für verschiedene Temperaturen keine unterschiedlichen Messsignale erfasst werden. Demnach muss die Messeinrichtung nur für eine Temperatur geeicht werden, und bietet dann eine temperaturunabhängige Möglichkeit zur Bestimmung der absorbierten Gasmenge.

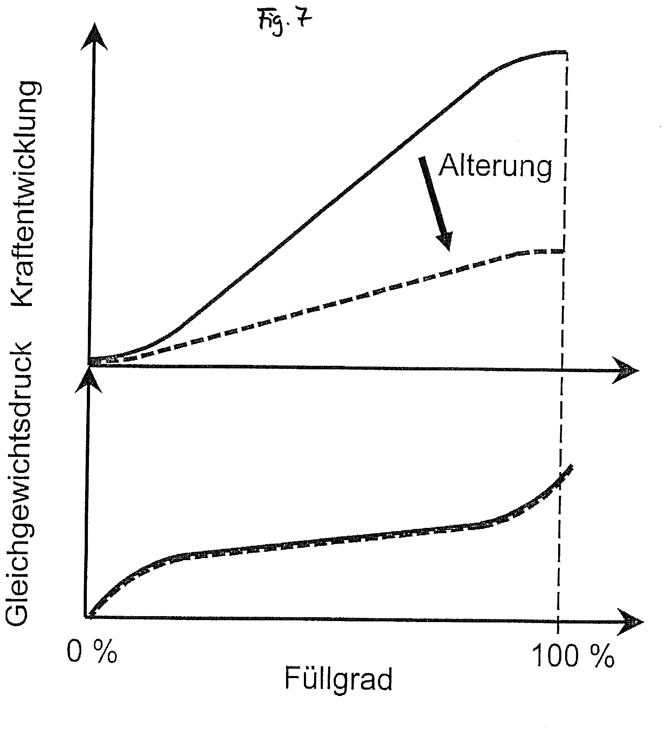

Die in Figur 7 gezeigten Diagramme verdeutlichen die Möglichkeit von Veränderungen (Alterung) im Speichermaterial, z.B. durch Verunreinigung im Gas, die mit Hilfe der hier vorgeschlagenen Messeinrichtung eindeutig festgestellt werden können. So ist die Kraftentwicklung für ein voll-aktives und ein gealtertes Speichermaterial im Vergleich zu den jeweiligen Konzentrations-Druck-Isothermen gezeigt. Es wird deutlich, dass bei den Isothermen, die häufig zur Bestimmung des Füllgrads herangezogen werden, kein Unterschied festzustellen war, wohingegen bei der Kraftentwicklung sich dies deutlich äußert. Damit kann die hier vorgeschlagene Messeinrichtung auch als sogenannte State-of-Health, also Zustandsanzeige hinsichtlich Alterung, Einsatz finden.

## Patentansprüche

1. Messeinrichtung zur Bestimmung der Menge eines in einem Speicherbehälter aufgenommenen Gases, der mit einem Speichermaterial gefüllt ist, bei der in einem Hohlraum eines Gehäuses (1) ein poröser Festkörper (2), der aus einem Material, das auf dem gleichen Speichermaterial wie das Material, das im Speicherbehälter aufgenommen ist, basiert, wobei mindestens ein Kraftmesssensor (3) mit dem im Hohlraum aufgenommenen porösen Festkörper (2) in Kontakt steht, und die Innenwand des Gehäuses (1) ein Widerlager für den Festkörper in einer Kraftmessrichtung bildet, und im Gehäuse (1) eine Öffnung (1.1) vorhanden ist, über die ein Gasaustausch zwischen Hohlraum und dem Inneren des Speicherbehälters möglich ist, dabei der mindestens eine Kraftmesssensor (3) mit einer Auswerteeinheit (4) verbunden ist, mit der die Bestimmung der Menge des aufgenommenen Gases erreichbar ist, **dadurch gekennzeichnet, dass** der poröse Festkörper (2) im Hohlraum so aufgenommen ist, dass keine Ausdehnung des den Festkörper (2) bildenden Materials erfolgen kann und die Wandung des Gehäuses (1) eine Festigkeit aufweist, die eine Deformation bei der Kraftmessung unbedingt vermeidet.

2. Messeinrichtung nach Anspruch 1, **dadurch gekennzeichnet, dass** an/in der Öffnung (1.1) eine Einrichtung für einen Gasaustausch, insbesondere ein für das jeweilige Gas permeabler Partikelfilter oder eine für das jeweilige Gas permeable Membran angeordnet ist.

3. Messeinrichtung nach einem der vorhergehenden Ansprüche, **dadurch gekennzeichnet, dass** der im Hohlraum aufgenommene poröse Festkörper (2) eine maximale Porosität von 75 % aufweist.

4. Messeinrichtung nach einem der vorhergehenden Ansprüche, **dadurch gekennzeichnet, dass** der im Hohlraum aufgenommene poröse Festkörper (2) in Form einer verdichteten Schüttung oder in verpresster Form des Speichermaterials aufgebaut ist und/oder neben dem Speichermaterial ein weiterer Stoff im Hohlraum enthalten ist.

5. Messeinrichtung nach dem vorhergehenden Anspruch, **dadurch gekennzeichnet, dass** das Speichermaterial als gerüttelte Schüttung, als geregelte Schüttung oder in Form einzelner Partikel, die in einer einzelnen Lage angeordnet sind, den porösen Festkörper (2) bildet.

6. Messeinrichtung nach einem der vorhergehenden Ansprüche, **dadurch gekennzeichnet, dass** die Messeinrichtung in das Innere des Speicherbehälters oder eine Verbindungsleitung, über die ein Gasaustausch mit dem Speicherbehälter erfolgt, eingeführt oder darin angeordnet ist.

7. Messeinrichtung nach einem der vorhergehenden Ansprüche, **dadurch gekennzeichnet, dass** eine Temperiereinrichtung am Gehäuse (1) vorhanden oder im Gehäuse (1) integriert ist.

8. Messeinrichtung nach einem der vorhergehenden Ansprüche, **dadurch gekennzeichnet, dass** der mindestens eine Kraftmesssensor (3) einen Verschluss für das Gehäuse (1) bildet.

9. Verfahren zur Bestimmung der Menge eines in einem Speicher aufgenommenen Gases mit einem porösen Festkörper basierend auf dem gleichen Speichermaterial mit einer Messeinrichtung nach einem der vorhergehenden Ansprüche, **dadurch gekennzeichnet, dass** die infolge einer in Abhängigkeit des vom im Hohlraum befindlichen porösen Festkörpers (2) absorbierten Gasmenge auftretenden inneren mechanischen Spannungen mit mindestens einem Kraftmesssensor (3) erfasst und über die gemessene Kraft die Menge an absorbiertem Gas mit einer Auswerteeinheit (4) bestimmt wird.

10. Verfahren nach dem vorhergehenden Anspruch, **dadurch gekennzeichnet, dass** die Kraftmessung bei einer bekannten und/oder vorgegebenen Temperatur durchgeführt und die Temperatur bei der Bestimmung der Menge des vom Speichermaterial absorbierten Gases berücksichtigt wird.

11. Verfahren nach den beiden vorhergehenden Ansprüchen, **dadurch gekennzeichnet, dass** durch einen zeitlichen Vergleich der wirkenden maximalen Kraft der Zustand des Speichermaterials, aus dem der poröse Festkörper (2) im Hohlraum gebildet ist, bestimmt und/oder bei der Bestimmung der Menge des von einem im/am Speichermaterial absorbierten Gases im Speicherbehälter berücksichtigt wird.

## Claims

1. Measurement device for determining the quantity of a gas accommodated in a storage container which is filled with a storage material, in which measurement device, in a cavity of a housing (1), a porous solid body (2) which from a material which is based on the same storage material as the material accommodated in the storage container, wherein at least one force measurement sensor (3) is in contact with the porous solid body (2) accommodated in the cavity, and the inner wall of the housing (1) forms an abutment for the solid body in a force measurement direction, and an opening (1.1) is provided in the housing (1), via which opening an exchange of gas between the cavity and the interior of the storage container is possible, the at least one force measurement sensor (3) being connected to an evaluation unit (4) by way of which the determination of the quantity of the accommodated gas is able to be achieved, **characterized in that** the porous solid body (2) is accommodated in the cavity such that no expansion of the material forming the solid body (2) can be realized, and the wall of the housing (1) has a degree of strength which unconditionally avoids deformation during the force measurement.

2. Measurement device according to Claim 1, **characterized in that**, at/in the opening (1.1), there is arranged a device for an exchange of gas, in particular a particle filter which is permeable to the respective gas or a diaphragm which is permeable to the respective gas.

3. Measurement device according to either of the preceding claims, **characterized in that** the porous solid body (2) accommodated in the cavity has a maximum porosity of 75%.

4. Measurement device according to one of the preceding claims, **characterized in that** the porous solid body (2) accommodated in the cavity is constructed in the form of a compacted bed or in the compressed form of the storage material, and/or, beside the storage material, a further material is contained in the cavity.

5. Measurement device according to the preceding claim, **characterized in that** the storage material forms the porous solid body (2) as a shaken bed, as a structured bed or in the form of individual particles which are arranged in a single layer.

6. Measurement device according to one of the preceding claims, **characterized in that** the measurement device is inserted into the interior of the storage container or into a connecting line via which an exchange of gas with the storage container is realized, or is arranged therein.

7. Measurement device according to one of the preceding claims, **characterized in that** a temperature control device is provided at the housing (1) or is integrated in the housing (1).

8. Measurement device according to one of the preceding claims, **characterized in that** the at least one force measurement sensor (3) forms a closure for the housing (1).

9. Method for determining the quantity of a gas accommodated in a storage with a porous solid body based on the same storage material using a measurement device according to one of the preceding claims, **characterized in that** the inner mechanical stresses arising as a result of a quantity of gas absorbed in dependence on the porous solid body (2) situated in the cavity are detected by at least one force measurement sensor (3), and, via the measured force, the quantity of absorbed gas is determined by an evaluation unit (4) .

10. Method according to the preceding claim, **characterized in that** the force measurement is carried out at a known and/or predefined temperature, and the temperature is taken into consideration during the determination of the quantity of the gas absorbed by the storage material.

11. Method according to the two preceding claims, **characterized in that**, by way of a temporal comparison of the active maximum force, the state of the storage material, from which the porous solid body (2) in the cavity is formed, is determined and/or is taken into consideration during the determination of the quantity of the gas in the storage container that has been absorbed in/on the storage material.

## Revendications

1. Dispositif de mesure pour la détermination de la quantité d'un gaz contenu dans un réservoir qui est rempli d'un matériau de stockage, dans lequel, dans une cavité d'un boîtier (1), est logé un corps solide poreux (2), basé sur le même matériau de stockage que celui qui est contenu dans le réservoir, au moins un capteur de mesure de force (3) étant en contact avec le corps solide poreux (2) logé dans la cavité et la paroi interne du boîtier (1) formant un contre-palier pour le corps solide dans une direction de mesure de force et, dans le boîtier (1), existe une ouverture (1.1) par l'intermédiaire de laquelle un échange de gaz est possible entre la cavité et l'intérieur du réservoir,
l'au moins un capteur de mesure de force (3) étant relié avec une unité d'analyse (4) avec laquelle il est possible de déterminer la quantité du gaz contenu, **caractérisé en ce que** le corps solide poreux (2) est logé dans la cavité de façon à ce qu'aucune dilatation du matériau constituant le corps solide (2) ne puisse avoir lieu et la paroi du boîtier (1) présente une résistance qui empêche absolument toute déformation lors de la mesure de force.

2. Dispositif de mesure selon la revendication 1, **caractérisé en ce que** sur/dans l'ouverture (1.1), est disposé un système pour un échange de gaz, plus particulièrement un filtre à particules perméable au gaz correspondant ou une membrane perméable au gaz correspondant.

3. Dispositif de mesure selon l'une des revendications précédentes, **caractérisé en ce que** le corps solide poreux (2) logé dans la cavité présente une porosité maximale de 75 %.

4. Dispositif de mesure selon l'une des revendications précédentes, **caractérisé en ce que** le corps solide poreux (2) logé dans la cavité se présente sous la forme d'un produit en vrac comprimé ou sous une forme compressée et/ou, en plus du matériau de stockage, une autre substance est contenue dans la cavité.

5. Dispositif de mesure selon la revendication précédente, **caractérisé en ce que** le matériau de stockage constitue le corps solide poreux (2) sous la forme d'un produit en vrac secoué, d'un produit en vrac régulé ou sous la forme de particules individuelles, qui sont disposées sur une seule couche.

6. Dispositif de mesure selon l'une des revendications précédentes, **caractérisé en ce que** le dispositif de mesure ou bien une conduite de liaison, par l'intermédiaire de laquelle un échange de gaz a lieu avec le réservoir, est inséré à l'intérieur du réservoir ou y est disposé.

7. Dispositif de mesure selon l'une des revendications précédentes, **caractérisé en ce qu'**un dispositif de contrôle de la température est présent sur le boîtier (1) ou est intégré dans le boîtier (1).

8. Dispositif de mesure selon l'une des revendications précédentes, **caractérisé en ce que** l'au moins un capteur de mesure de force (3) constitue une fermeture pour le boîtier (1).

9. Procédé de détermination de la quantité d'un gaz contenu dans un réservoir, avec un corps solide poreux basé sur le même matériau de stockage, avec un dispositif de mesure selon l'une des revendications précédentes, **caractérisé en ce que** les contraintes mécaniques internes apparaissant suite à une quantité de gaz absorbée en fonction du corps solide poreux (2) se trouvant dans la cavité sont mesurées avec au moins un capteur de mesure de force (3) et, en fonction de la force mesurée, la quantité de gaz absorbé est déterminée avec une unité d'analyse (4).

10. Procédé selon la revendication précédente, **caractérisé en ce que** la mesure de force est effectuée à une température connue et/ou prédéterminée et la température est prise en compte lors de la détermination de la quantité de gaz absorbée par le matériau de stockage.

11. Procédé selon l'une des revendications précédentes, **caractérisé en ce que**, grâce à une comparaison temporelle de la force maximale exercée, l'état du matériau de stockage, dont est constitué le corps solide poreux (2) dans la cavité, est déterminé et/ou est pris en compte lors de la détermination de la quantité de gaz absorbée dans/sur le matériau de stockage dans le réservoir.
